# EUROPÄISCHE PATENTSCHRIFT

(11) **EP 2 398 811 B1**
(45) Veröffentlichungstag und Bekanntmachung des Hinweises auf die Patenterteilung: **24.10.2012**
(21) Anmeldenummer: 10704134.5
(22) Anmeldetag: 11.02.2010
(51) Int. Cl.: C07F 7/02, C07F 7/10

(54) **VERFAHREN ZUR HERSTELLUNG UND STABILISIERUNG VON OLIGOAMINOSILANEN**
METHOD FOR PRODUCING AND STABILIZING OLIGOAMINOSILANES
PROCÉDÉ DE FABRICATION ET DE STABILISATION D'OLIGOAMINOSILANES

(30) Priorität: 23.02.2009 DE 102009001088
(43) Veröffentlichungstag der Anmeldung: 28.12.2011
(73) Patentinhaber: Wacker Chemie AG, 81737 München (DE)
(72) Erfinder: KNIES, Wolfgang, 84489 Burghausen (DE); EIBLMEIER, Hans, 84489 Burghausen (DE)
(74) Vertreter: Fritz, Helmut
(86) Internationale Anmeldenummer: PCT/EP2010/051672
(87) Internationale Veröffentlichungsnummer: WO 2010/094610

(56) Entgegenhaltungen:
- WO-A1-03/045959
- DE-A1- 10 362 060
- US-A- 2 385 018
- US-A1- 2004 096 582
- "Kohlenstoff" In: "Ullmanns Encyklopädie der technischen Chemie" 1977, , XP002574597 Bd. 14, , Seiten 631-632

## Beschreibung

Die Erfindung betrifft ein Verfahren zur Herstellung von Oligoaminosilanen aus Oligohalogensilan und primärem Amin, wobei dem Reaktionsgemisch Aktivkohle zugesetzt wird, sowie die Stabilisierung der Oligoaminosilane.

Aminosilan-Verbindungen sind für die Herstellung von Si-N- und Si-O-Schichten von großem Interesse. Aminosubstituierte Monosilane sind hierfür schon untersucht wurden, auch einige Disilane zeigen gute Eigenschaften. Insofern besteht ein Interesse an Verbindungen mit hohem Siliziumgehalt.

WO 03/045959 beschreibt die Herstellung von Hexakisethylaminodisilan aus Hexachlordisilan und Ethylamin in Pentan. Das so hergestellte Hexakisethylaminodisilan ist auch unter striktem Ausschluss von Wasser und Luft nur begrenzt lagerstabil.

Da für die Anwendungen von Oligoaminosilanen, wie Hexakisethylaminodisilan, eine hohe Reinheit erforderlich ist, bestand ein hoher Bedarf an Produkten, die bei der Lagerung nicht zur Zersetzung und damit Verunreinigung neigen.

Gegenstand der Erfindung ist ein Verfahren zur Herstellung von Oligoaminosilanen der allgemeinen Formel (I)

SiₙY₂ₙ₊₂ (I),

bei dem Oligohalogensilane der allgemeinen Formel (II)

SiₙX₂ₙ₊₂ (II),

mit primären Aminen allgemeinen Formel (III)

R-NH₂ (III),

in Kohlenwasserstoffen als Lösemittel umgesetzt werden, wobei
- **X**: ausgewählt wird aus Chlor, Brom und Iod,
- **Y**: Halogen, Wasserstoff oder R-NH,
- **R**: ein Kohlenwasserstoffrest mit 1 bis 20 Kohlenstoffatomen und
- **n**: Werte von 1 bis 20 bedeuten,
mit der Massgabe, dass höchstens 35 Mol-% der Reste Y Wasserstoff bedeuten und
höchstens 15 Mol-% der Reste Y Halogen bedeuten,
wobei dem Reaktionsgemisch Aktivkohle zugesetzt wird.

Durch die Anwesenheit der Aktivkohle bei der Herstellung der Oligoaminosilane der allgemeinen Formel (I) wird die Lagerstabilität der Oligoaminosilane deutlich gesteigert. Auch kann die Ausbeute an Oligoaminosilanen der allgemeinen Formel (I) verbessert werden. Ferner wird auch der Chlorgehalt des Produkts vermindert.

Die im Verfahren eingesetzte Aktivkohle weist vorzugsweise mindestens 90 Gew.-% Kohlenstoff auf. Die BET-Oberfläche beträgt vorzugsweise mindestens 200, inbesondere mindestens 400 m²/g Aktivkohle. Die Aktivkohle kann aus pflanzlichen, tierischen, mineralischen oder petrochemischen Ausgangsstoffen hergestellt werden. Die Herstellung geschieht vorzugsweise durch Behandlung der Ausgangsstoffe mit Dehydratisierungsmitteln, wie Zinkchlorid, Schwefelsäure oder Phosphorsäure bei 500 bis 900°C oder durch trockene Destillation. Die so erhaltene Rohaktivkohle wird anschließend oxidativ aktiviert bei 700 bis 1000°C mit Wasserdampf oder Kohlendioxid, oder mit Luft.

In der allgemeinen Formel (I) bedeuten vorzugsweise höchstens 20 Mol-%, besonders bevorzugt höchstens 10 Mol-%, inbesondere keine der Reste Y Wasserstoff.
In der allgemeinen Formel (I) bedeuten vorzugsweise höchstens 1 Mol-%, besonders bevorzugt höchstens 0,1 Mol-%, insbesondere höchstens 0,01 Mol.-%, inbesondere bevorzugt keine der Reste Y Halogen.

Das Halogen X und gegebenenfalls Y ist vorzugsweise Chlor.

R kann insbesondere ein linearer oder verzweigter Alkyl-, Cycloalkyl-, Aryl-, Alkenyl- oder Arylalkylrest sein. Bevorzugt weist der Rest R 1 bis 12, insbesondere 1 bis 6 Kohlenstoffatome auf. Besonders bevorzugte Reste R sind Methyl-, Ethyl-, n-Propyl-, iso-Propyl-, n-Butyl-, iso-Butyl-, tert. Butyl-, n-Pentyl-, iso-Pentyl-, neo-Pentyl- oder tert.-Pentylrest und Phenylrest.

n bedeutet vorzugsweise Werte von 1 bis 6, besonders bevorzugt sind die Werte 1, 2, 3 und 4.

Als Kohlenwasserstoff-Lösemittel werden Lösemittel und Lösemittel-Gemische mit einem Siedepunkt bzw. Siedebereich von bis zu 120°C bei 1 bar bevorzugt. Beispiele für solche Lösemittel sind die Alkane mit 3 bis 10 Kohlenstoffatomen, Aromaten mit 6 bis 12 Kohlenstoffatomen, halogenierte Alkane mit 1 bis 3 Kohlenstoffatomen und deren Gemische. Bevorzugte Beispiele sind Dichlormethan, Tetrachlormethan, Butan, Pentan, Hexan, Heptan, Oktan, Benzol, Toluol und Xylole und deren Isomerengemische.

Bevorzugt hergestellte Oligoaminosilane der allgemeinen Formel (I) sind linear oder verzweigt. Besonders bevorzugt hergestellte Oligoaminosilane der allgemeinen Formel (I) sind lineare Oligoaminosilane der allgemeinen Formel (IV)

Y(SiY₂)ₘSiY₃ (IV),

bei denen Y die vorstehenden Bedeutungen aufweist und m die Werte 1, 2, 3, 4 oder 5 bedeutet.

Ebenfalls bevorzugt hergestellte Oligoaminosilane der allgemeinen Formel (I) sind die Oligoaminosilane der allgemeinen Formel (V)

Y₃Si(SiZ₂)SiY₃ (V),

bei denen Y die vorstehenden Bedeutungen aufweist und Z Wasserstoff, Halogen oder SiY₃ bedeutet.

Vorzugsweise wird primäres Amin der allgemeinen Formel (III) im Überschuss gegenüber dem Oligohalogensilan der allgemeinen Formel (II) eingesetzt. Vorzugsweise beträgt der Überschuss an primärem Amin mindestens 1,1 : 1, besonders bevorzugt mindestens 2 : 1 und insbesondere mindestens 5 : 1 und vorzugsweise höchstens 20 : 1, jeweils bezogen auf 1 Mol Gruppen X im Oligohalogensilan.

Pro Mol Gruppen X im Oligohalogensilan werden vorzugsweise mindestens 0,5 g, besonders bevorzugt mindestens 2 g und vorzugsweise höchstens 30 g, besonders bevorzugt höchstens 10 g Aktivkohle eingesetzt.

In einer bevorzugten Ausführungsform wird die Aktivkohle nach Umsetzung von mindestens 50 %, insbesondere 75 % der Gruppen X im Oligohalogensilan dem Reaktionsgemisch zugesetzt.

In einer weiteren bevorzugten Ausführungsform wird das primäre Amin der allgemeinen Formel (III) im Lösemittel vorgelegt und das Oligohalogensilan der allgemeinen Formel (II) zudosiert. Vorzugsweise wird nach Zugabe des Oligohalogensilans die Aktivkohle zugesetzt. Besonders bevorzugt wird erst der Überschuss an Amin entfernt und danach die Aktivkohle zugesetzt.

Vorzugsweise beträgt die Temperatur der Umsetzung mindestens -80°C, besonders bevorzugt mindestens -40°C und vorzugsweise höchstens 100°C, besonders bevorzugt höchstens 30°C.

Vorzugsweise beträgt der Druck der Umsetzung 0,5 bar, besonders bevorzugt mindestens 1 bar und vorzugsweise höchstens 10 bar. Beim Einsatz leichtflüchtiger primärer Amine, wie Methylamin und Ethylamin, kann die Anwendung von Drücken von mehr als 1 bar vorteilhaft sein.

Vorzugsweise wird die Aktivkohle bei der Aufarbeitung des Reaktionsgemisches abfiltriert.

Ebenfalls Gegenstand der Erfindung ist ein Verfahren zur Stabilisierung von Oligoaminosilanen der allgemeinen Formel (I), bei dem die Oligoaminosilane mit Aktivkohle versetzt werden. Vorzugsweise wird dazu Aktivkohle in stückiger Form eingesetzt.

Alle vorstehenden Symbole der vorstehenden Formeln weisen ihre Bedeutungen jeweils unabhängig voneinander auf. In allen Formeln ist das Siliciumatom vierwertig.

In den folgenden Beispielen sind, falls jeweils nicht anders angegeben, alle Mengen- und Prozentangaben auf das Gewicht bezogen, alle Drücke 1 bar (abs.) und alle Temperaturen 20°C.

### Beispiel 1: Herstellung von Hexakisethylaminodisilan (erfindungsgemäß)

Es werden in einen Kolben 1300 g Isohexan gegeben. In dieses werden 720 g Ethylamin einkondensiert. Hierzu wird die Lösung auf -40°C abgekühlt. Anschliessend werden unter Kühlung 270 g Hexachlordisilan so dosiert, dass die Temperatur 0°C nicht überschreitet. Nach Beendigung der Dosierung wird 1 Stunde gerührt und anschließend der Kolbeninhalt in einen Filter überführt. Aus der erhaltenen Lösung werden überschüssiges Ethylamin und ca. 400 g Isohexan abdestilliert. Hierzu wird ein Vakuum angelegt, das bei einer Temperatur von ca. 40°C sukzessive auf 400 mbar erhöht wird. Das nunmehr erhaltene Konzentrat (ca. 1100 g) wird mit 30 g Aktivkohle unter Rühren für 10 Stunden behandelt. Die Aktivkohle wird abfiltriert und das Konzentrat destilliert. Das Zielprodukt Hexakisethylaminodisilan tritt bei 120°C Kopftemperatur und 2,5 mbar über.

### Beispiel 2: Herstellung von Hexakisethylaminodisilan (nicht erfindungsgemäß)

Es werden in einen Kolben 1300 g Isohexan gegeben. In dieses werden 720 g Ethylamin einkondensiert. Hierzu wird die Lösung auf -40°C abgekühlt. Anschliessend werden unter Kühlung 270 g Hexachlordisilan so dosiert, dass die Temperatur 0°C nicht überschreitet. Nach Beendigung der Dosierung wird 1 Stunde gerührt und anschließend der Kolbeninhalt in einen Filter überführt. Die Lösung wird anschließend destilliert. Hierzu wird sukzessive bei einer Temperatur von 60°C das Vakuum auf 1-3 mbar erhöht. Danach wird wieder die Temperatur bei 1-3mbar erhöht. Das Zielprodukt Hexakisethylaminodisilan tritt bei 120°C Kopftemperatur und 2,5 mbar über.

### Tests der Produkte

Die Stabilität des nach Beispiel 1 und 2 hergestellten Hexakisethylaminodisilans wird durch Erhitzen von ca. 5 g Substanz in einem verschraubten Stahlrohr bei 150°C untersucht. Die prozentuale Abnahme des Hexakisethylaminodisilans beträgt:

| | 1 Tag/150°C | 5 Tage/150°C |
|---|---|---|
| Produkt von Beispiel 2* | -24% | -53% |
| Produkt von Beispiel 1 | -4% | -23% |

| | | |
|---|---|---|
| *nicht erfindungsgemäß | | |

Durch die erfindungsgemäße Behandlung mit Aktivkohle wird auch die Ausbeute erhöht. Die Ausbeute beträgt über alle Fraktionen:

| | |
|---|---|
| Produkt von Beispiel 2 (nicht erfindungsgemäß) | 77% |
| Produkt von Beispiel 1 | 82% |

Durch die erfindungsgemäße Vorgehensweise wird auch der Chlorgehalt des Produkts vermindert. Er beträgt, gemessen über Ionenchromatographie:

| | |
|---|---|
| Produkt von Beispiel 2 (nicht erfindungsgemäß) | 25 ppm |
| Produkt von Beispiel 1 | 13 ppm |

## Patentansprüche

1. Verfahren zur Herstellung von Oligoaminosilanen der allgemeinen Formel (I)
SiₙY₂ₙ₊₂ (I),
bei dem Oligohalogensilane der allgemeinen Formel (II)
SinX₂ₙ₊₂ (II),
mit primären Aminen der allgemeinen Formel (III)
R-NH₂ (III),
in Kohlenwasserstoffen als Lösemittel umgesetzt werden, wobei
**X** ausgewählt wird aus Chlor, Brom und Iod,
**Y** Halogen, Wasserstoff oder R-NH,
**R** ein Kohlenwasserstoffrest mit 1 bis 20 Kohlenstoffatomen und
**n** Werte von 1 bis 20 bedeuten, mit der Massgabe, dass höchstens 35 Mol-% der Reste Y Wasserstoff bedeuten und höchstens 15 Mol-% der Reste Y Halogen bedeuten, wobei dem Reaktionsgemisch Aktivkohle zugesetzt wird.

2. Verfahren nach Anspruch 1, bei dem R ein Alkylrest mit 1 bis 6 Kohlenstoffatomen bedeutet.

3. Verfahren nach Anspruch 1 oder 2, bei dem lineare Oligoaminosilane der allgemeinen Formel (IV)
Y(SiY₂)ₘSiY₃ (IV),
hergestellt werden, bei denen Y die in Anspruch 1 angegebenen Bedeutungen aufweist und
**m** die Werte 1, 2, 3, 4 oder 5 bedeutet.

4. Verfahren nach Anspruch 1 oder 2, bei dem Oligoaminosilane der allgemeinen Formel (V)
Y₃Si(SiZ₂)SiY₃ (V),
hergestellt werden, bei denen Y die in Anspruch 1 angegebenen Bedeutungen aufweist und
**Z** Wasserstoff, Halogen oder SiY₃ bedeutet.

5. Verfahren nach Anspruch 1 bis 4, bei dem primäres Amin der allgemeinen Formel (III) im Überschuss gegenüber dem Oligohalogensilan der allgemeinen Formel (II) eingesetzt wird.

6. Verfahren nach Anspruch 5, bei dem die Aktivkohle nach Umsetzung von mindestens 75 % der Gruppen X im Oligohalogensilan dem Reaktionsgemisch zugesetzt wird.

7. Verfahren nach Anspruch 1 bis 6, bei dem das primäre Amin der allgemeinen Formel (III) im Lösemittel vorgelegt und das Oligohalogensilan der allgemeinen Formel (II) zudosiert wird und nach Zugabe des Oligohalogensilans die Aktivkohle zugesetzt wird.

8. Verfahren nach Anspruch 1 bis 7, bei dem die Temperatur der Umsetzung -80°C bis 100°C beträgt.

9. Verfahren zur Stabilisierung von Oligoaminosilanen der allgemeinen Formel (I) gemäss Anspruch 1, bei dem die Oligoaminosilane mit Aktivkohle versetzt werden.

## Claims

1. Process for preparing oligoaminosilanes of the general formula (I)
SᵢₙY₂ₙ₊₂ (I),
in which oligohalosilanes of the general formula (II)
SiₙX₂ₙ₊₂ (II)
are reacted with primary amines of the general formula (III)
R-NH₂ (III)
in hydrocarbons as a solvent,
where
**X** is selected from chlorine, bromine and iodine,
**Y** is halogen, hydrogen or R-NH,
**R** is a hydrocarbyl radical having 1 to 20 carbon atoms, and
**n** has values of 1 to 20,
with the proviso that at most 35 mol% of the **Y** radicals are hydrogen and
at most 15 mol% of the Y radicals are halogen, wherein activated carbon is added to the reaction mixture.

2. Process according to Claim 1, in which **R** is an alkyl radical having 1 to 6 carbon atoms.

3. Process according to Claim 1 or 2, in which linear oligoaminosilanes of the general formula (IV)
Y(SiY₂)ₘSiY₃ (IV)
are prepared, in which **Y** is as defined in Claim 1 and
**m** has the values of 1, 2, 3, 4 or 5.

4. Process according to Claim 1 or 2, in which oligoaminosilanes of the general formula (V)
Y₃Si(SiZ₂)SiY₃ (V)
are prepared, in which **Y** is as defined in Claim 1 and
**Z** is hydrogen, halogen or SiY₃.

5. Process according to Claims 1 to 4, in which primary amine of the general formula (III) is used in excess compared to the oligohalosilane of the general formula (II).

6. Process according to Claim 5, in which the activated carbon is added to the reaction mixture after conversion of at least 75% of the **X** groups in the oligohalosilane.

7. Process according to Claims 1 to 6, in which the primary amine of the general formula (III) is initially charged in the solvent and the oligohalosilane of the general formula (II) is metered in and, after addition of the oligohalosilane, the activated carbon is added.

8. Process according to Claims 1 to 7, in which the conversion temperature is -80°C to 100°C.

9. Process for stabilizing oligoaminosilanes of the general formula (I) according to Claim 1, in which the oligoaminosilanes are admixed with activated carbon.

## Revendications

1. Procédé de fabrication d'oligoaminosilanes de formule générale (I)
SiₙY₂ₙ₊₂ (I)
dans lequel des oligohalogénosilanes de formule générale (II)
SiₙX₂ₙ₊₂ (II)
sont mis en réaction avec des amines primaires de formule générale (III)
R-NH₂ (III)
dans des hydrocarbures en tant que solvant,
X étant choisi parmi chlore, brome et iode,
Y signifiant halogène, hydrogène ou R-NH,
R signifiant un radical hydrocarboné de 1 à 20 atomes de carbone et
n signifiant des valeurs de 1 à 20,
à condition qu'au plus 35 % en moles des radicaux Y signifient hydrogène et
qu'au plus 15 % en moles des radicaux Y signifient halogène,
du charbon actif étant ajouté au mélange réactionnel.

2. Procédé selon la revendication 1, dans lequel R signifie un radical alkyle de 1 à 6 atomes de carbone.

3. Procédé selon la revendication 1 ou 2, dans lequel des oligoaminosilanes linéaires de formule générale (IV)
Y(SiY₂)ₘSiY₃ (IV)
sont fabriqués, Y présentant les significations données dans la revendication 1 et
m signifiant les valeurs 1, 2, 3, 4 ou 5.

4. Procédé selon la revendication 1 ou 2, dans lequel des oligoaminosilanes de formule générale (V)
Y₃Si(SiZ₂)SiY₃ (V)
sont fabriqués, Y présentant les significations données dans la revendication 1 et
Z signifiant hydrogène, halogène ou SiY₃.

5. Procédé selon les revendications 1 à 4, dans lequel une amine primaire de formule générale (III) est utilisée en excès par rapport à l'oligohalogénosilane de formule générale (II).

6. Procédé selon la revendication 5, dans lequel le charbon actif est ajouté au mélange réactionnel après la réaction d'au moins 75 % des groupes X dans l'oligohalogénosilane.

7. Procédé selon les revendications 1 à 6, dans lequel l'amine primaire de formule générale (III) est chargée initialement dans le solvant et l'oligohalogénosilane de formule générale (II) est ajouté et le charbon actif est ajouté après l'ajout de l'oligohalogénosilane.

8. Procédé selon les revendications 1 à 7, dans lequel la température de la réaction est de -80 °C à 100 °C.

9. Procédé de stabilisation d'oligoaminosilanes de formule générale (I) selon la revendication 1, dans lequel les oligoaminosilanes sont mélangés avec du charbon actif.
